(19) Europäisches Patentamt
European Patent Office
Office européen des brevets

(11) **EP 2 128 744 A2**

(12) **EUROPEAN PATENT APPLICATION**

(43) Date of publication:
**02.12.2009 Bulletin 2009/49**

(51) Int Cl.:
*G06F 3/033* (2006.01)

(21) Application number: **09004472.8**

(22) Date of filing: **27.03.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **30.05.2008 TW 97120029**

(71) Applicant: **ASUSTeK Computer Inc.**
**Peitou**
**Taipei (TW)**

(72) Inventor: **Ho, Yueh-Sheng**
**Taipei (TW)**

(74) Representative: **Jordan, Volker Otto Wilhelm et al**
**Weickmann & Weickmann**
**Patentanwälte**
**Postfach 860 820**
**81635 München (DE)**

(54) **Pointing device and method for determining rotational angle of pointing device**

(57)    The invention discloses a pointing device comprising a first sensing unit, a second sensing unit and a processing unit. The first sensing unit is utilized for sensing a first rotational angle of the pointing device relative to an absolute coordinate system. The second sensing unit is utilized for sensing a second rotational angle of the pointing device relative to the absolute coordinate system. The processing unit is utilized for receiving the first and second rotational angles, calculating an absolute difference between the first and second rotational angles and judging whether the absolute difference is smaller than a predetermined threshold. If it is YES, the processing unit outputs the first rotational angle; otherwise, the processing unit calibrates the first rotational angle by the second rotational angle and then outputs the calibrated rotational angle.

FIG. 5

**Description**

**BACKGROUND OF THE INVENTION**

**1. Field of the invention**

The invention relates to a pointing device and particularly to a pointing device and a method for determining a rotational angle of the pointing device. The invention utilizes two sensing units to calculate and calibrate a rotational angle of the pointing device, and furthermore, the resolution of the pointing device is raised.

**2. Description of the prior art**

Presently, a computer is an electronic product for daily use. Generally, a user can utilize a keyboard and a pointing device such as mouse, joystick, touch panel, or track ball to input an instruction or further operate the computer to execute a particular function.

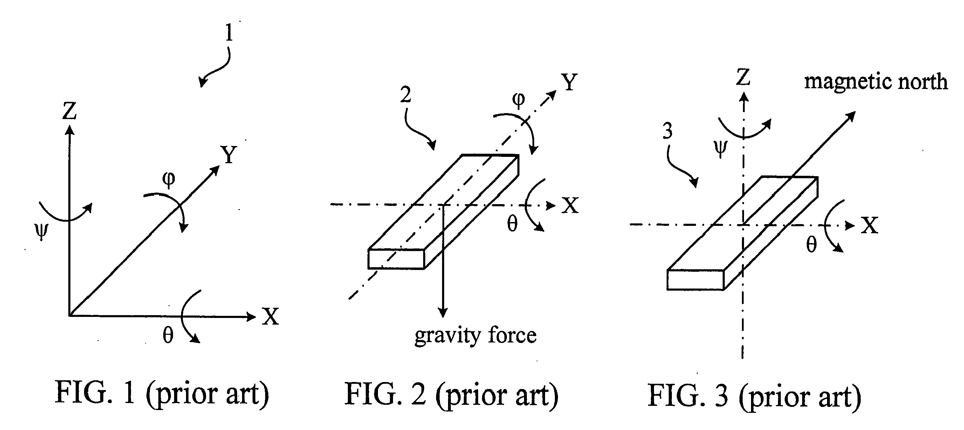

To operate the pointing device in a space, the pointing device utilizes a sensing unit such as a gyroscope, G sensor, or magnetic sensor to sense a rotational angle. The main part of the gyroscope is a rotatable wheel posited on an axis. The gyroscope is designed for sensing and keeping direction based on a law of conservation of angular momentum. Generally, although the resolution of the gyroscope is higher than the G sensor and the magnetic sensor, the gyroscope only outputs relative value without corresponding to the absolute coordinate system of the user. Please refer to FIG. 1. FIG. 1 is a schematic diagram illustrating an absolute coordinate system 1. In 3D space, the absolute coordinate system 1 includes X axis, Y axis, and Z axis. As shown in FIG. 1, the rotational angle relative to X axis is $\theta$, the rotational angle relative to Y axis is $\varphi$, and the rotational angle relative to X axis is $\psi$.

Please refer to FIG. 2. FIG. 2 is a schematic diagram illustrating a traditional G sensor 2 for sensing a rotational angle. As shown in FIG. 2, when the G sensor 2 rotates relative to the X axis or Y axis of the absolute coordinate system 1 in FIG. 1, the G sensor 2 can sense the rotational angle $\theta$ relative to X axis or the rotational angle $\varphi$ relative to Y axis because of the downward gravity force.

Please refer to FIG. 3. FIG. 3 is a schematic diagram illustrating a traditional magnetic sensor 3 for sensing a rotational angle. As shown in FIG. 3, it is assumed that the Y axis of the absolute coordinate system points to the magnetic north, when the magnetic sensor 3 rotates relative to X axis or Z axis of the absolute coordinate system 1, the magnetic sensor 3 can sense the rotational angle $\theta$ relative to X axis or the rotational angle $\psi$ relative to Z axis.

However, the resolution of the G sensor 2 and the magnetic sensor 3 both are lower than the gyroscope 1. Additionally, the G sensor and the magnetic sensor both naturally have electronic noise, and furthermore the positional accuracy is lowered.

The traditional 3D pointing device only adopts the signal outputted by a single sensing unit, and the traditional sensing unit such as a gyroscope, G sensor, and magnetic sensor has aforesaid disadvantages, so when a traditional 3D pointing device points at a single axis, the movement of the cursor can not be accurately controlled.

**SUMMARY OF THE INVENTION**

A scope of the invention is to provide a pointing device, which utilizes two or more sensors to calculate and calibrate the rotational angle of the pointing device, and furthermore the resolution of the pointing device is raised.

According to an embodiment, the pointing device of the invention includes a first sensing unit, a second sensing unit, and a processing unit. The first sensing unit and the second sensing unit are respectively coupled to the processing unit. The first sensing unit can be a gyroscope or other rotational sensing unit. The second sensing unit can be a G sensor or a magnetic sensor.

In this embodiment, the first sensing unit is utilized for sensing a first rotational angle of the pointing device relative to the absolute coordinate system. The second sensing unit is utilized for sensing a second rotational angle of the pointing device relative to the absolute coordinate system. The processing unit is utilized for receiving the first rotational angle and the second rotational angle, and calculates the absolute difference between the first rotational angle and the second rotational angle. When the processing unit determines that the absolute difference is larger than a predetermined threshold, the processing unit calibrates the first rotational angle by the second rotational angle and outputs a calibrated rotational angle.

Another scope of the invention is to provide a method for determining a rotational angle of a pointing device. The method includes the following steps of: sensing a first rotational angle of the pointing device relative to an absolute coordinate system; sensing a second rotational angle of the pointing device relative to the absolute coordinate system; calculating an absolute difference between the first rotational angle and the second rotational angle; when the absolute difference is larger than a predetermined threshold, calibrating the first rotational angle by the second rotational angle and outputting a calibrated rotational angle.

In practical application, the movement of a cursor or an object in a space is controlled based on the aforesaid first rotational angle or calibrated rotational angle.

Therefore, when the difference between the first and the second rotational angle is in a tolerable range, the pointing device of the invention outputs the first rotational angle.

The advantage of the invention is that, when the difference between the first rotational angle and the second rotational angle is too large, the pointing device calibrates the first rotational angle by the second rotational angle, and furthermore the resolution is raised.

The advantage and spirit of the invention may be understood by the following recitations together with the appended drawings.

## BRIEF DESCRIPTION OF THE APPENDED DRAWINGS

FIG. 1 is a schematic diagram illustrating an absolute coordinate system.

FIG. 2 is a schematic diagram illustrating a traditional G sensor for sensing a rotational angle.

FIG. 3 is a schematic diagram illustrating a traditional magnetic sensor for sensing a rotational angle.

FIG. 4 is a schematic diagram illustrating a pointing device according to an embodiment of the invention.

FIG. 5 is a block function of the pointing device shown in FIG. 4.

FIG. 6 is a flow chart of a method for determining the rotational angle of the pointing device shown in FIG. 4.

## DETAILED DESCRIPTION OF THE INVENTION

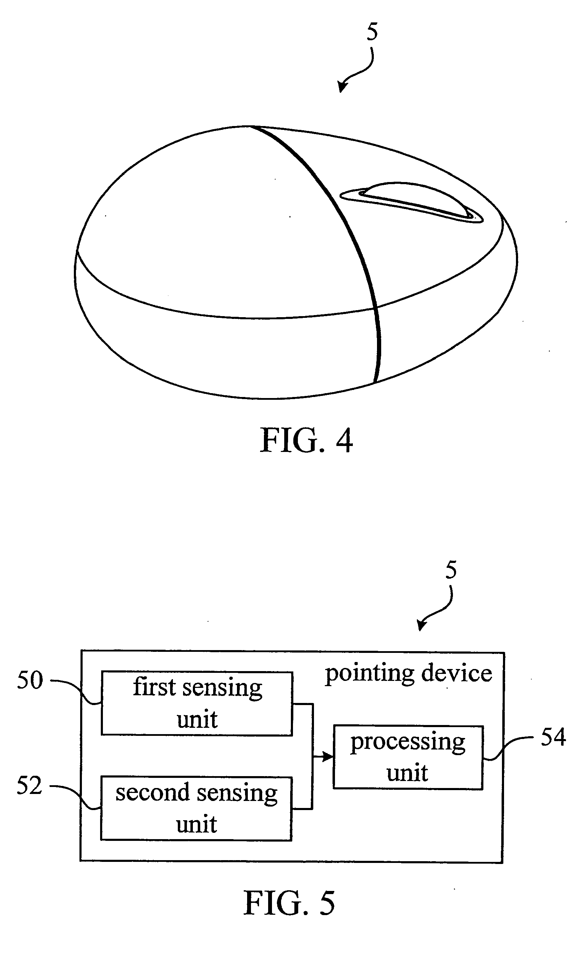

Please refer to FIG. 4 and FIG. 5. FIG. 4 is a schematic diagram illustrating a pointing device 5 according to an embodiment of the invention. FIG. 5 is a block function of the pointing device 5 shown in FIG. 4. Depending on practical application, the pointing device of the invention can be a mouse, a joystick, a trackball, etc. The pointing device 5 shown in FIG. 4 is, but not limited to, a mouse.

As shown in FIG. 5, the pointing device 5 includes a first sensing unit 50, a second sensing unit 52, and a processing unit 54. The first sensing unit 50 and the second sensing unit 52 are respectively coupled to the processing unit 54. In this embodiment, the first sensing unit 50 can be a gyroscope or other rotational sensing unit. The second sensing unit 52 can be a G sensor or a magnetic sensor.

When the user rotates the pointing device 5 to change the inclined angle, the first sensing unit 50 can sense the first rotational angle of the pointing device 5 relative to the absolute coordinate system (shown in FIG. 1). Alternatively, the first rotational angle is a relative rotational angle. For example, the first sensing unit 50 is a gyroscope, and the gyroscope senses a variation of angular velocity of the pointing device 5 relative to the absolute coordinate system to derive the first rotational angle.

Additionally, when the user rotates the pointing device 5, meanwhile the second sensing unit 52 senses the second rotational angle of the pointing device 5 relative to the absolute coordinate system. Alternatively, the second rotational angle is an absolute rotational angle. For example, the second sensing unit 52 is a G sensor, and the G sensor senses a variation of the gravity force of the pointing device 5 relative to the absolute coordinate system to derive the second rotational angle. Another way is if the second sensing unit 52 is a magnetic sensor, the magnetic sensor sense a variation of the magnetic force of the pointing device relative to the absolute coordinate system to derive the second rotational angle.

Please refer to FIG. 5. The processing unit 54 is utilized for receiving the first rotational angle sensed by the first sensing unit 50 and the second rotational angle sensed by the second sensing unit 52. Afterward, the processing unit calculates the absolute difference between the first and the second rotational angle, and judges whether the absolute difference is smaller than a predetermined threshold. When the judgment result is YES, alternatively, the absolute difference is smaller than the predetermined threshold, the processing unit 54 outputs the first rotational angle as a control signal for controlling the movement of a cursor. Contrarily, when the judgment result is NO, that is the absolute difference is larger than or equal to the predetermined threshold, the processing unit 54 calibrates the first rotational angle by the second rotational angle. Then, the processing unit 54 outputs a calibrated rotational angle as a control signal for controlling the movement of a cursor.

In this embodiment, the aforesaid calibrated rotational angle can be calculated from the following equation.

$$\text{Equation 1: } A\_out = (A1 * W1 + A2 * W2) / (W1 + W2).$$

A_out is the calibrated rotational angle; A1 is the first rotational angle; W1 is a first weight; A2 is the second rotational angle; W2 is a second weight. The first weight W1 and the second weight W2 can be changed by the designer. Preferably, the first weight W1 can be designed to, but not limited to, be larger than the second weight.

For example, the first rotational angle sensed by the first sensing unit 50 is 10 degrees, the second rotational angle sensed by the second sensing unit 52 is 9 degrees, and the predetermined threshold is 3 degrees. The absolute difference between the first rotational angle and the second rotational angle is 1 degree and smaller than the predetermined threshold, so the processing 54 outputs the first rotational angle (i.e. 10 degrees) as a control signal for controlling the movement of a cursor.

If the first rotational angle sensed by the first sensing unit 50 is 10 degrees, the second rotational angle sensed by the second sensing unit 52 is 5 degrees, and the predetermined threshold is 3 degrees. The absolute difference between the first rotational angle and the second rotational angle is 5 degree and larger than the predetermined threshold, so the processing 54 calibrates the first rotational angle according to the aforesaid equation one, and outputs a calibrated rotational angle as a control signal for controlling the movement of a cursor. If the first weight W1 is 2, and the second weight W2 is 1, the calibrated rotational angle is calculated to be 8.33.

Additionally, before the pointing device 5 of the invention is used, the user configures the first sensing unit 50 to return to zero, such that the movement control can be more accurate. For example, if the output value of the first sensing unit 50 is zero, it means that the first sensing unit 50 holds still. Meanwhile, the output value of the second sensing unit 52 is recorded for calibration. In other embodiments, the pointing device 5 can be returned to zero by other methods. For example, the output value of the second sensing unit 52 keeps the same during a period of time (e.g. 10 seconds), and the output value of the second sensing unit 52 at that time can be used for calibration.

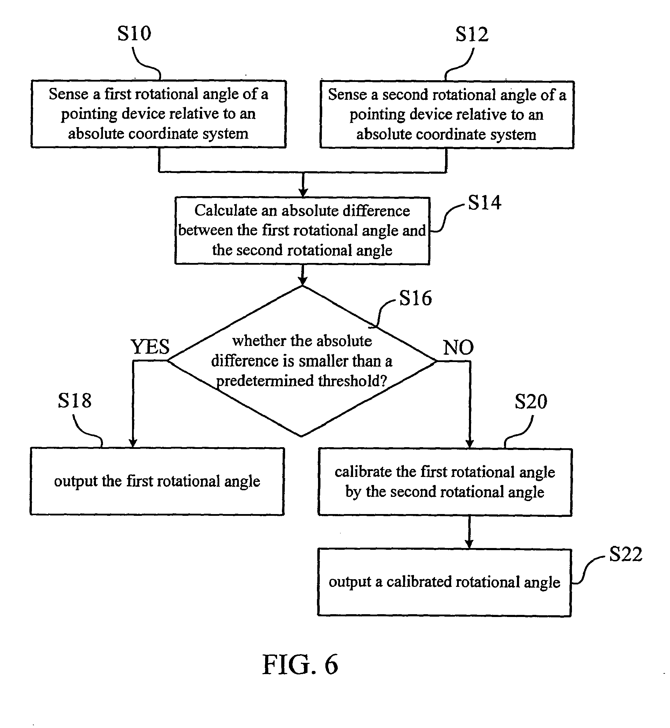

Please refer to FIG. 6. FIG. 6 is a flow chart of a method for determining the rotational angle of the pointing device 5 shown in FIG. 4. At first, step S10 is performed to sense the first rotational angle of the pointing device 5 relative to the absolute coordinate system. Meanwhile, step S12 is performed to sense the second rotational angle of the pointing device 5 relative to the absolute coordinate system. Afterwards, step S 14 is performed to calculate the absolute difference between the first rotational angle and the second rotational angle. Then, step S16 is performed to judge whether the absolute difference is smaller than a predetermined threshold. If the judgment result of the step S16 is YES, step S 18 is performed to output the first rotational angle. If the judgment result of the step S16 is NO, step S20 is performed to calibrate the first rotational angle by the second rotational angle. Then, step S22 is performed to output the calibrated rotational angle.

If the first sensing unit 50 of the pointing device5 is a gyroscope, the step S10 is performed to sense the variation of the angular velocity of the pointing device relative to the absolute coordinate system to derive the first rotational angle. If the second sensing unit 52 of the pointing device 5 is a G sensor, the step S12 is performed to sense the variation of the gravity force of the pointing device 5 relative to the absolute coordinate system to derive the second rotational angle. If the second sensing unit 52 of the pointing device 5 is a magnetic sensor, the step S12 is performed to sense the variation of the magnetic force relative to the coordinate system to derive the second rotational angle.

In other words, depending on practical application, the pointing device of the invention utilizes the gyroscope or other rotational sensing unit to cooperate with the G sensor or the magnetic sensor.

Compared with prior art, the pointing device of the invention utilizes two sensing units to calculate and calibrate the rotational angle of the pointing device. When the difference between the first and the second rotational angle is in a tolerable range, the pointing device of the invention outputs the first rotational angle. When the difference between the first rotational angle and the second rotational angle is too large, the pointing device calibrates the first rotational angle by the second rotational angle to output a calibrated rotational angle. Accordingly, the resolution of the movement control can be highly raised.

With the example and explanations above, the features and spirits of the invention will be hopefully well described. Those skilled in the art will readily observe that numerous modifications and alterations of the device may be made while retaining the teaching of the invention. Accordingly, the above disclosure should be construed as limited only by the metes and bounds of the appended claims.

The invention discloses a pointing device comprising a first sensing unit, a second sensing unit and a processing unit. The first sensing unit is utilized for sensing a first rotational angle of the pointing device relative to an absolute coordinate system. The second sensing unit is utilized for sensing a second rotational angle of the pointing device relative to the absolute coordinate system. The processing unit is utilized for receiving the first and second rotational angles, calculating an absolute difference between the first and second rotational angles and judging whether the absolute difference is smaller than a predetermined threshold. If it is YES, the processing unit outputs the first rotational angle; otherwise, the processing unit calibrates the first rotational angle by the second rotational angle and then outputs the calibrated rotational angle.

**Claims**

1. A pointing device, comprising:

   a first sensing unit, for sensing a first rotational angle of the pointing device relative to an absolute coordinate system;
   a second sensing unit, for sensing a second rotational angle of the pointing device relative to the absolute coordinate system; and
   a processing unit, coupled to the first sensing unit and the second sensing unit respectively, for receiving the first rotational angle and the second rotational angle, and calculating an absolute difference between the first rotational angle and the second rotational angle, when the processing unit determines that the absolute difference is larger than a predetermined threshold, the processing unit calibrating the first rotational angle according to the second rotational angle and outputting a calibrated rotational angle.

2. The pointing device of claim 1, wherein the first sensing unit is a gyroscope, for sensing a variation of an angular velocity of the pointing device relative to the absolute coordinate system to output the first rotational angle.

3. The pointing device of claim 1, wherein the second sensing unit is a G sensor, for sensing a variation of a gravity force of the pointing device relative to the absolute coordinate system to derive the second rotational angle.

4. The pointing device of claim 1, wherein the second sensing unit is a magnetic sensor, for sensing a variation of a magnetic force of the pointing device relative to the absolute coordinate system to derive the second rotational angle.

5. The pointing device of claim 1, wherein the calibrated rotational angle is calculated from the following equation:

$$A\_out = (A1*W1 + A2*W2) / (W1 + W2),$$

   wherein A_out is the calibrated rotational angle, A1 is the first rotational angle, W1 is a first weight, A2 is the second rotational angle, W2 is a second weight.

6. The pointing device of claim 5, wherein the first weight is larger than the second weight.

7. A method for determining a rotational angle of a pointing device, comprising the following steps of:

   sensing a first rotational angle of the pointing device relative to an absolute coordinate system;
   sensing a second rotational angle of the pointing device relative to the absolute coordinate system;
   calculating an absolute difference between the first rotational angle and the second rotational angle; and
   when the absolute difference is larger than a predetermined threshold, calibrating the first rotational angle according to the second rotational angle and outputting a calibrated rotational angle.

8. The method of claim 7, wherein the first rotational angle is derived from a variation of an angular velocity of the pointing device relative to the coordinate system.

9. The method of claim 7, wherein the second rotational angle is derived from a variation of an gravity force of the pointing device relative to the coordinate system.

10. The method of claim 7, wherein the second rotational angle is derived from a variation of an magnetic force of the pointing device relative to the coordinate system.

11. The method of claim 7, wherein the calibrated rotational angle is calculated from the following equation:

$$A\_out = (A1*W1 + A2*W2) / (W1 + W2),$$

wherein A_out is the calibrated rotational angle, A1 is the first rotational angle, W1 is a first weight, A2 is the second rotational angle, W2 is a second weight.

12. The method of claim 11, wherein the first weight is larger than the second weight.

FIG. 1 (prior art)

FIG. 2 (prior art)

FIG. 3 (prior art)

EP 2 128 744 A2

5

## FIG. 4

5

## FIG. 5

S10                                  S12

| Sense a first rotational angle of a pointing device relative to an absolute coordinate system | Sense a second rotational angle of a pointing device relative to an absolute coordinate system |
|---|---|

Calculate an absolute difference between the first rotational angle and the second rotational angle    S14

S16

YES     whether the absolute difference is smaller than a predetermined threshold?    NO

S18                                    S20

| output the first rotational angle | calibrate the first rotational angle by the second rotational angle |
|---|---|

output a calibrated rotational angle    S22

FIG. 6